# EUROPÄISCHE PATENTSCHRIFT

(11) **EP 0 558 117 B1**
(45) Veröffentlichungstag und Bekanntmachung des Hinweises auf die Patenterteilung: **13.05.1998**
(21) Anmeldenummer: 93200421.1
(22) Anmeldetag: 16.02.1993
(51) Int. Cl.: G01T 1/29, H05G 1/60, G03B 42/02, H04N 5/325

(54) **Verfahren zum Erzeugen von Röntgenaufnahmen und Röntgengerät zur Durchführung des Verfahrens**
Method for producing X-ray images and X-ray apparatus according to this method
Procédé pour la fabrication de radiographies et appareil radiographique pour la réalisation du procédé

(30) Priorität: 24.02.1992 DE 4205522
(43) Veröffentlichungstag der Anmeldung: 01.09.1993
(73) Patentinhaber: Philips Patentverwaltung GmbH, 22335 Hamburg (DE); Philips Electronics N.V., 5621 BA Eindhoven (NL)
(72) Erfinder: Hillen, Walter, Dr., W-5100 Aachen (DE); Snoeren, Rudolph Maria, NL-5502 RD Veldhoven (NL)
(74) Vertreter: Hartmann, Heinrich, Dipl.-Ing.

(56) Entgegenhaltungen:
- EP-A- 0 266 819
- DE-A- 3 842 649
- US-A- 4 383 327
- US-A- 4 736 397
- US-A- 4 901 336

## Beschreibung

Die Erfindung betrifft ein Verfahren zum Erzeugen von Röntgenaufnahmen mittels eines Röntgenbildwandlers und eines CCD-Bildaufnehmers.

Aus der US-PS 4.901.336 sind ein solches Verfahren und ein solches Röntgengerät bekannt. Dabei wird von einem Bildaufnehmer ausgegangen, der das Ausgangsbild eines Röntgen-Bildverstärkers in elektrische Signale umsetzt und der für eine bestimmte Bildfrequenz ausgelegt ist (30 Einzelbilder/Sek). Am Ende jeder Bildperiode wird das Bild mittels eines Transferimpulses in den Speicherbereich des CCD-Bildaufnehmers übertragen, wo es ausgelesen wird, während das nächste Bild erzeugt wird. Um mit einem derartigen Bildaufnehmer auch Röntgenaufnahmen anfertigen zu können, deren Belichtung länger dauert als eine Bildperiode, wird die Folge der Transferimpulse während einer Röntgenaufnahme unterbrochen.

Bei einer angiographischen Untersuchung, beispielsweise einer Kontrastmitteluntersuchung der Herzkranzgefäße, geht es hingegen darum, eine möglichst kurze Dauer einer Röntgenaufnahme zu erreichen. Hierbei findet zunächst ein Durchleuchtungsbetrieb statt, bei dem der Untersuchungsbereich kontinuierlich mit relativ geringer Dosisleistung durchstrahlt wird. Die Durchleuchtungsbilder haben wegen der geringen Dosisleistung bzw. der geringen Dosis pro Durchleuchtungsbild ein geringes Signal/Rausch-Verhältns. Die dadurch erhaltene Bildqualität reicht aber aus, um die Ausbreitung des Kontrastmittels in den Gefäßen zu verfolgen.

Um dabei bestimmte Ausbreitungsphasen des Kontrastmittels dokumentieren zu können, werden Röntgenaufnahmen angefertigt. Diese Röntgenaufnahmen werden mit einem zeitlichen Abstand wiederholt, der groß ist im Vergleich zur Dauer einer Bildperiode (im Durchleuchtungsbetrieb). Für jede Röntgenaufnahme ist zur Erzielung eines guten Signal/Rausch-Verhältnisses eine Dosis erforderlich, die wesentlich größer ist als die Dosis eines Einzelbildes im Durchleuchtungsbetrieb, und die Aufnahmedauer sollte kürzer sein als die Dauer einer Bildperiode im Durchleuchtungsbetrieb, damit die Bewegungsunschärfen in der Röntgenaufnahme gering bleiben.

Es hat sich jedoch gezeigt, daß mit einem derartigen CCD-Bildaufnehmer nicht die Bildqualität zu erreichen ist, die mit einem direkt belichteten Röntgenfilm-Verstärkerfoliensystem bei derart hohen Dosen und bei hohen Ortsfrequenzen erzielbar ist.

Aufgabe der vorliegenden Erfindung ist es, ein Verfahren der eingangs genannten Art so auszugestalten, daß sich eine verbesserte Bildqualität der Röntgenaufnahme - auch bei schnell ablaufenden physiologischen Vorgängen - ergibt. Die erfindungsgemäße Lösung dieser Aufgabe ist gekennzeichnet durch folgende Verfahrensschritte:
a) Erzeugen einer ersten Röntgenbelichtung während eines ersten Zeitintervalls, das kürzer ist als die Auslesedauer eines im Speicherbereich des CCD-Bildaufnehmers enthaltenen Bildes,
b) Transferieren des bei der ersten Röntgenbelichtung in dem Bildbereich des CCD-Bildaufnehmers erzeugten ersten Bildes in dessen Speicherbereich nach dem Ablauf des ersten Zeitintervalls,
c) Erzeugen einer zweiten Röntgenbelichtung unmittelbar nach Röntgenbelichtung während eines zur Auslesedauer kurzen zweiten Zeitintervalls,
d) Auslesen des ersten Bildes aus dem Speicherbereich und Einlesen des Bildes in einen weiteren Speicher
e) Transferieren des zweiten Bildes in den Speicherbereich nach dem Auslesen des ersten Bildes,
f) Auslesen des zweiten Bildes und Summieren zu dem im weiteren Speicher gespeicherten ersten Bild zwecks Erzeugung der Röntgenaufnahme.

Die Erfindung basiert auf folgenden Überlegungen:

Bei einer kleinen Röntgenstrahlendosis pro Einzelbild wird das Signal/Rausch-Verhältnis dieses Einzelbildes im wesentlichen durch die Statistik der Röntgenquanten bestimmt, weil das durch die aus Röntgenbildwandler und

CCD-Aufnehmer bestehende Übertragungskette verursachte Rauschen im Vergleich zum Quantenrauschen vernachlässigbar ist.

Bei einer hohen Röntgenstrahlendosis pro Einzelbild hingegen macht sich die begrenzte Speicherkapazität des CCD-Bildaufnehmers nachteilig bemerkbar: Gebräuchliche CCD-Bildaufnehmer können pro CCD-Zelle (eine CCD-Zelle speichert eine der Helligkeit in einem Bildpunkt entsprechende Ladung) maximal nur eine bestimmte Anzahl von Elektronen speichern. Diese Zahl liegt für Videosensoren zwischen 50.000 und 100.000 Elektronen. Um eine Übersteuerung des CCD-Bildaufnehmers zu vermeiden, muß die mittlere Bildhelligkeit einer niedrigeren Zahl entsprechen, z.B. 20.000. Dem entspricht ein weißes Rauschen (Schrotrauschen bzw. shot noise) von 141 Elektronen. Dieses Rauschen ist unabhängig von der Ortsfrequenz.

Hingegen wird infolge des deutlichen Abfalls der Modulationsübertragungsfunktion bei höheren Ortsfrequenzen das Helligkeitssignal (und mit ihm das damit einhergehende von der Statistik der Röntgenquanten bestimmte Rauschen) soweit reduziert, daß nunmehr nicht mehr die Statistik der Röntgenquanten das Rauschen bestimmt, sondern die Statistik der in einer CCD-Zelle speicherbaren Ladungsträger. Dadurch wird das Ortsauflösungsvermögen des Detektors beschränkt.

Bei der Erfindung wird die Bildqualität dadurch verbessert, daß (wenigstens) zwei Bilder zu einer Röntgenaufnahme addiert werden, so daß die Zahl der Röntgenquanten pro Bildpunkt entsprechend einem Faktor 2 vergrößert wird. Dadurch wird das durch die Statistik der in einer CCD-Zelle speicherbaren Ladungsträger bestimmte Signal/Rausch-Verhältnis entsprechend der Quadratwurzel dieses Faktors (3 dB) erhöht.

An sich ist es aus der US-PS 4,901,336 schon bekannt, mehrere während einer Bildperiode erzeugte Einzelbilder zu addieren, um eine Röntgenaufnahme zu erhalten. Deshalb beträgt die Belichtungszeit einer solchen Röntgenaufnahme ein mehrfaches einer einzelnen Bildperiode (40 ms). Dieses bekannte Verfahren eignet sich daher nur für wenig oder gar nicht bewegte Strukturen. Für die Aufnahme schneller Bewegungen, beispielsweise der Ausbreitung eines Kontrastmittels in den Herzkranzgefäßen, ist dieses bekannte Verfahren aber ungeeignet.

Bei der Erfindung wird demgegenüber die spezielle Eigenschaft von CCD-Bildaufnehmern ausgenutzt, zwei (bei anderen Typen auch drei) Bilder auf dem Sensor zwischenspeichern zu können. Im Normalbetrieb eines CCD-Bildaufnehmers wird nämlich am Ende einer Bildperiode das im Bildbereich eines CCD-Bildaufnehmers erzeugte Bild durch einen Transferimpuls innerhalb von Mikrosekunden in den Speicherbereich transferiert. Dort wird es praktisch während der gesamten nächsten Bildperiode ausgelesen, innerhalb der im Bildbereich des CCD-Bildaufnehmers das nächste Bild erzeugt wird.

Bei der Erfindung wird ein erstes Bild in einem Zeitintervall (von z.B. einigen ms) aufgebaut, das klein ist im Vergleich zur Dauer einer Bildperiode (z.B. 40 ms) bzw. zur Auslesedauer. Unmittelbar nach dem Ende dieses Zeitintervalls wird dieses Bild in den Speicherbereich transferiert und danach folgt sofort ein zweites Zeitintervall von gleicher Dauer wie das erste, in dem im Bildbereich das nächste Bild aufgebaut wird. Es versteht sich von selbst, daß innerhalb der Zeitintervalle die Röntgenbelichtung so intensiv sein muß, daß sich in den einzelnen CCD-Zellen möglichst hohe Ladungen ergeben, ohne daß in den für die Diagnose wichtigen Bildbereichen die maximale Ladung erreicht wird.

Bei der Erfindung werden in einer kurzen Zeit (verglichen mit der Auslesedauer) somit zwei Röntgenbelichtungen durchgeführt, die nach der Summierung der beiden Bilder zu einer Röntgenaufnahme mit einer geringen Bewegungsunschärfe führen. Im Gegensatz zum normalen Betrieb eines CCD-Bildaufnehmers wird nach dem Ende des zweiten Zeitintervalls bzw. der zweiten Röntgenbelichtung noch das erste Bild - ganz oder teilweise - aus dem Bildspeicher ausgelesen. Erst nach dem Ende dieses Auslesevorganges erfolgt der Transfer des zweiten Bildes in den Bildspeicher und danach das Auslesen des zweiten Bildes aus dem Bildspeicher.

Eine Weiterbildung der Erfindung sieht vor, daß die Schritte a) bis f) nach einer Zeitspanne wiederholt werden, deren Dauer größer ist als die zweifache Auslesedauer. Dadurch ergibt sich eine Folge von Röntgenaufnahmen mit einer vergleichsweise geringen Bildfrequenz (z.B. sechs Bilder pro Sekunde oder weniger), jedoch mit einer hohen Bildqualität. Dadurch lassen sich die verschiedenen Bewegungsphasen eines schnell bewegten Objektes gut dokumentieren.

In einer weiteren Ausgestaltung der Erfindung, die einen CCD-Bildaufnehmer mit zwei Speicherbereichen voraussetzt, ist vorgesehen, daß nach der ersten Röntgenbelichtung das erste Bild zunächst in dem ersten Speicherbereich transferiert wird, daß nach der zweiten Röntgenbelichtung das zweite Bild in den ersten Speicherbereich transferiert wird und eine dritte Röntgenbelichtung erfolgt, und daß die durch drei Röntgenbelichtungen erzeugten drei Bilder nacheinander ausgelesen und zueinander addiert werden. Diese Ausgestaltung, die bei CCD-Bildaufnehmern vom Typ "Frame Interline Transfer" anwendbar ist, führt durch Addition der drei gleichzeitig im CCD-Bildaufnehmer verarbeiteten Bilder zu einer Röntgenaufnahme mit noch weiter verbesserter Bildqualität.

Ein Röntgengerät zur Durchführung des erfindungsgemäßen Verfahrens, das vesehen ist mit einem Röntgenstrahler zum Durchstrahlen eines Untersuchungsbereichs, einem Röntgenbildwandler zur Umsetzung der jenseits des Untersuchungsbereichs eintreffenden Röntgenstrahlung in ein sichtbares Bild, einer Bildaufnahmevorrichtung mit einem Bildaufnehmer zur Umsetzung des sichtbaren Bildes in elektrische Signale, einem weiteren Speicher zur Aufnahme der elektrischen Signale und einer Steuereinheit zur Steuerung der Komponenten des Röntgengerätes, ist dadurch gekennzeichnet, daß Mittel zum bildpunktweisen Addieren des aus dem CCD-Bildaufnehmer ausgelesenen Bildes zu dem in dem weiteren Speicher gespeicherten Bild vorgesehen sind und daß die Steuereinheit die Komponenten derart steuert, daß zwei oder mehrere kurze Röntgenbelichtungen in geringem zeitlichen Abstand voneinander erfolgen, daß die dabei erzeugten Bilder nacheinander den bzw. die Speicherbereiche des CCD-Bildaufnehmers durchlaufen und daß die Bilder aus dem letzten Speicherbereich nacheinander ausgelesen, gespeichert und zueinander addiert werden.

Die Erfindung wird nachstehend anhand der Zeichnung näher erläutert. Es zeigen:
Fig. 1 ein schematisches Blockschaltbild eines Untersuchungsgerätes,
Fig. 2 ein Schema eines CCD-Bildaufnehmers einer ersten Art,
Fig. 3 den zeitlichen Verlauf der Röntgenbelichtung und des Ladungsträgertransportes in einem derartigen CCD-Bildaufnehmer bei dem erfindungsgemäßen Verfahren,
Fig. 4 einen CCD-Bildaufnehmer eines zweiten Typs,
Fig. 5 einen CCD-Bildaufnehmer eines dritten Typs und
Fig. 6 die Aufeinanderfolge der Röntgenbelichtungen und Ladungsträgerverschiebungen in einem CCD-Bildaufnehmer nach Fig. 5.

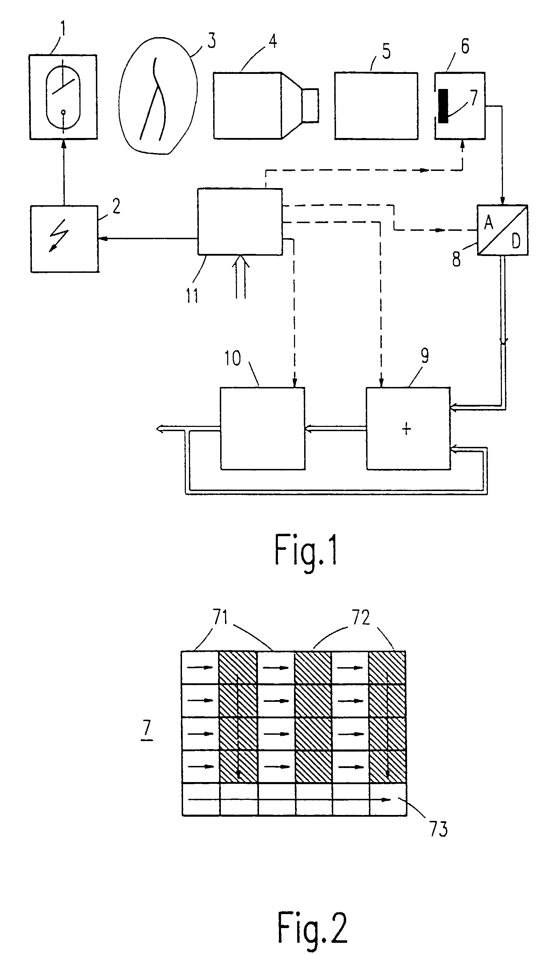

Das in Fig. 1 dargestellte Röntgenuntersuchungsgerät weist einen Röntgenstrahler 1 auf und einen Röntgengenerator 2, der die erforderlichen Spannungen und Ströme für den Röntgenstrahler liefert. Die von dem Röntgenstrahler emittierte Strahlung durchsetzt einen Untersuchungsbereich, in dem sich ein Objekt 3 befindet, beispielsweise ein Patient, in dessen Herzkranzgefäßen sich ein zuvor injiziertes Kontrastmittel ausbreitet. Ein Röntgenbildwandler 4 setzt das erzeugte Röntgenbild in ein sichtbares Bild um. Als Röntgenbildwandler dient vorzugsweise ein Röntgenbildverstärker mit hohem örtlichen Auflösungsvermögen, der das Röntgenbild auf seinem Eingangsschirm in ein sichtbares verkleinertes Bild auf seinem Ausgangsschirm umsetzt. Dieses Bild wird mittels einer Optik 5 einer Fernsehkamera 6 zugeführt, die einen hochauflösenden CCD-Bildaufnehmer für z.B. 1000 * 1000 oder 2000 * 2000 Bildpunkte enthält. Die Fernsehkamera 6 setzt das mittels der Optik 5 auf ihren Eingangsschirm abgebildete sichtbare Bild in ein elektrisches Signal um, das seinerseits von einem Analog-Digital-Wandler 8 in eine Folge digitaler Datenworte umgesetzt wird.

Der Ausgang des Analog-Digital-Wandlers 8 ist über eine Addierschaltung 9 mit einem digitalen Speicher 10 verbunden, der für jeden Bildpunkt des CCD-Bildaufnehmers einen Speicherplatz aufweist, in dem ein der Belichtung des betreffenden Bildpunkts entsprechender Wert gespeichert werden kann. Der Ausgang des Speichers ist mit einem weiteren Eingang der Addierschaltung 9 verbunden, so daß bei Bedarf ein in dem Speicher 10 gespeichertes Bild und ein von der Fernsehkamera 6 geliefertes Bild bildpunktweise zueinander addiert und wieder in den Speicher 10 eingeschrieben werden können. Die Addierschaltung, die Teil eines geeigneten Bildverarbeitungsrechners sein kann, sollte so ausgebildet und im Signalpfad angeordnet bzw. so programmiert sein, daß in einer anderen Betriebsart die den einzelnen Bildpunkten zugeordneten Bildwerte direkt, d.h. ohne Addition mit den Bildwerten eines vorangegangenen Bildes, in den Speicher 10 geschrieben werden. Der Inhalt des digitalen Speichers kann einem Monitor zugeführt werden oder einer Bildausgabeeinheit (hardcopy-unit). Darüberhinaus kann er zwecks Archivierung in einen Massenspeicher, z.B. einer Magnetplattenspeichereinheit eingeschrieben werden. Die genannten Einheiten sind in Fig. 1 nicht näher dargestellt.

Die einzelnen Komponenten 1 bis 10 des Röntgengerätes werden, wie durch gestrichelte Linien angedeutet, von einer Steuereinheit 11 gesteuert, die ihrerseits vom Benutzer gesteuert werden kann. Die Steuereinheit 11, dieeinen geeignet programmierten Prozessor enthalten kann, muß nicht sämtliche zum Betrieb der verschiedenen Komponenten erforderlichen Steuerschaltungen enthalten. Beispielsweise kann der Impulsmustergenerator, der die notwendigen Steuersignale und Impulsfolgen liefert, mit denen in dem CCD-Bildaufnehmer der Bildtransfer und das Auslesen eines Bildes erfolgt, in der Kamera 6 räumlich integriert sein. Die Steuereinheit 11 muß also lediglich diesen Generator in der erforderlichen Weise steuern können.

Mit dem in Fig. 1 dargestellten Röntgenuntersuchungsgerät kann einerseits ein Durchleuchtungsbetrieb und andererseits ein Aufnahmebetrieb durchgeführt werden.

Im Durchleuchtungsbetrieb ist der Röntgengenerator 2 so eingestellt, daß der Röntgenstrahler 1 kontinuierlich Röntgenstrahlung emittiert, jedoch mit einer geringen Dosisleistung. Das am Ausgang des Röntgenbildverstärkers 4 erscheinende Durchleuchtungsbild wird von der Fernsehkamera 6 aufgenommen und in elektrische Signale umgesetzt. Dabei wird der Bildbereich des CCD-Aufnehmers während einer Bildperiode belichtet, die z.B. 40 ms dauern kann, entsprechend einer Bildfrequenz von 25 Bildern pro Sekunde. Während dieser Bildperiode wird gleichzeitig das im Speicherbereich des CCD-Bildaufnehmers befindliche vorangegangene Durchleuchtungsbild ausgelesen und dem Analog-Digitalwandler zugeführt. Am Ende der Bildperiode wird das im Bildbereich erzeugte Durchleuchtungsbild durch einen Transferimpuls in den Speicherbereich transferiert und während der nächsten Bildperiode ausgelesen, in der der Bildbereich schon mit dem nächsten Durchleuchtungsbild belichtet wird. Anstelle von 25 Vollbildern können auch 50 Halbbilder im sogenannten Interlace-Verfahren erzeugt werden. Die Bildperiode bzw. die Auslesedauer ist in diesem Fall nur halb so groß wie bei einem Vollbild.

Die von der Fernsehkamera 6 gelieferten Bildsignale werden vom Analog-Digital-Wandler 8 digitalisiert und auf nicht näher dargestellte Weise direkt, d.h. ohne Addition, in den Bildspeicher 10 geschrieben, so daß am Ende einer Bildperiode in dem digitalen Bildspeicher 10 das Durchleuchtungsbild gespeichert ist, das in der vorangegangenen Bildperiode im Bildbereich des CCD-Bildaufnehmers 7 aufgebaut wurde. Die Durchleuchtungsbilder aus dem Speicher 10 werden fortlaufend mittels eines geeigneten Sichtgerätes dargestellt. Dieser Durchleuchtungsbetrieb der in Fig. 1 dargestellten Anlage entspricht dem Normalbetrieb des aus der US-PS 4,901,336 bekannten Röntgengerätes; er ist nicht Gegenstand der Erfindung.

Im Durchleuchtungsbetrieb ist die Dosisleistung so niedrig, daß jedes Durchleuchtungsbild nur mit einer geringen Dosis erzeugt wird. Infolgedessen sind die einzelnen Durchleuchtungsbilder mit starkem Rauschen behaftet. Dieses Rauschen wird bei der Betrachtung auf dem Sichtgerät dadurch etwas gemildert, daß das Auge des Betrachters wegen der vergleichsweise hohen Bildfrequenz über mehrere aufeinanderfolgende Durchleuchtungsbilder integriert. Die auf diese Weise erzielte Bildqualität reicht aus, um den Betrachter die Ausbreitung des Kontrastmittels in den Herzkranzgefäßen des Patienten 3 erkennen zu lassen.

Wenn das Kontrastmittel einen für die Diagnose wichtigen Bereich erreicht hat, schaltet der Benutzer auf den Aufnahmebetrieb um. In diesem Aufnahmebetrieb werden mit einer geringen Bildfrequenz (6 Aufnahmen/sec oder weniger) Röntgenaufnahmen mit hoher Bildqualität und geringer Bewegungsunschärfe erzeugt, die die verschiedenen Phasen der Ausbreitung des Kontrastmittels in dem für die Diagnose wichtigen Bereich darstellen.

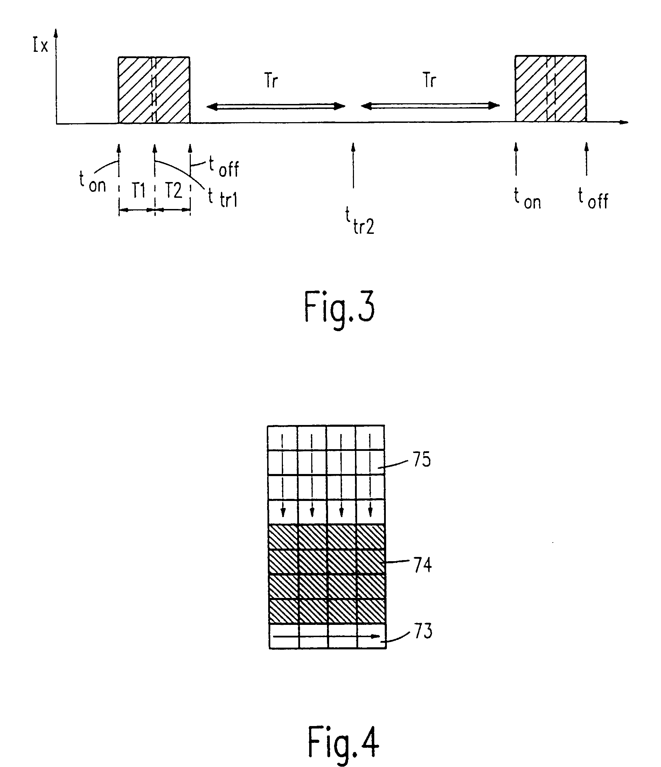

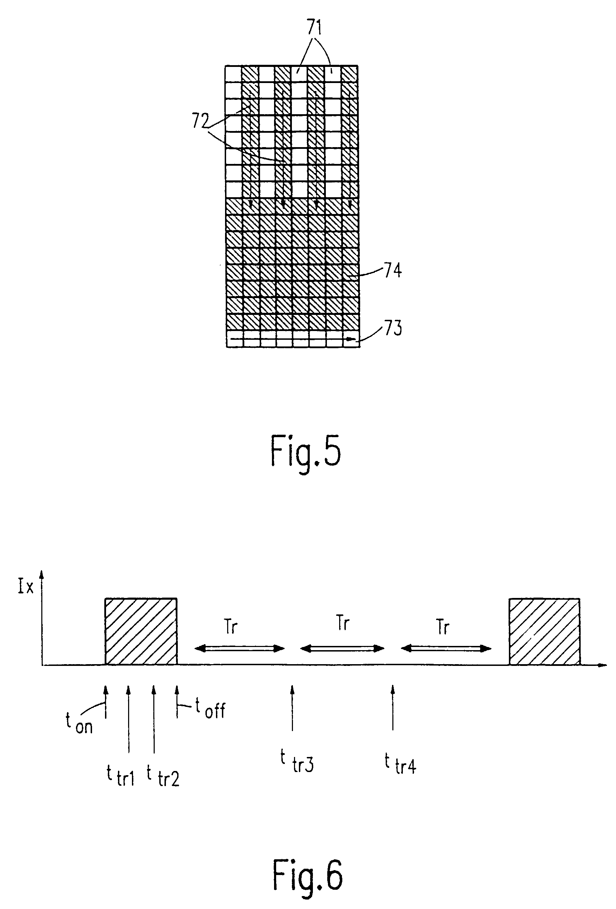

Der Aufnahmebetrieb wird nachstehend in Verbindung mit denFiguren 2 und 3 näher erläutert. Fig. 2 zeigt schematisch einen CCD-Bildaufnehmer vom Interline-Transfer-Typ. Dieser Bildaufnehmer und die in den Figuren 4 und 5 beschriebenen Bildaufnehmer sind aus der Veröffentlichung von M. Kriss et al "Critical technologies for electronic still imaging systems", Proc. SPIE 1082, 1989, S. 157 ff, bekannt. Der Bildbereich besteht aus einer Vielzahl von vertikalen Spalten 71, von denen jede eine Vielzahl von CCD-Bildaufnehmern enthält. Der Speicherbereich besteht aus der gleichen Anzahl von Spalten 72, von denen jede genausoviel CCD-Zellen enthält wie die Spalten 71. Diese CCD-Zellen sind jedoch gegen Lichteinfall abgeschirmt. Die Spalten 72 können abwechselnd neben den Spalten 71 angeordnet sein, wie in der Zeichnung dargestellt, oder aber jeweils unterhalb einer Spalte 71, so daß sie nicht vom Licht getroffen werden. Der Transfer eines Bildes vom Bildbereich 71 in den Speicherbereich 71 erfolgt dadurch, daß die Ladungsträger sämtlicher CCD-Zellen gleichzeitig in die entsprechenden Zellen der zugeordneten Spalte 72 des Speicherbereichs transferiert werden. Dieser Transfer kann in wenigen Mikrosekunden erfolgen.

Beim Auslesen werden die CCD-Zellen einer Spalte als Schieberegister betrieben, wobei die in den CCD-Zellen gespeicherten Ladungspakete nacheinander die benachbarten CCD-Zellen durchlaufen. Die auf diese Weise aus den Spalten schrittweise herausgeschobenen Ladungspakete werden in ein horizontales Schieberegister 73 aufgenommen, das soviele Register- bzw. CCD-Zellen enthält, wie Spalten vorhanden sind. Die Ladungsträger in dem Register 73 werden wesentlich schneller von Zelle zu Zelle verschoben als in den Registern 72, so daß das Register 73 einmal vollständig ausgelesen ist, bevor die nächsten Ladungspakete aus den Registern 72 übernommen werden. Die geschilderte Verschiebung der Ladungsträger beim Transfer sowie beim Auslesen ist in der Fig. 2 durch Pfeile angedeutet.

Figur 3 zeigt den zeitlichen Ablauf einer Röntgenaufnahme und die zeitliche Lage der Transfer- und Auslesevorgänge. Dabei ist die Intensität Iₓ der Röntgenstrahlung als Ordinate eingezeichnet.

Im Zeitpunkt tₒₙ wird die Röntgenstrahlung mit einer so hohen Intensität Iₓ eingeschaltet, daß innerhalb eines Zeitraums T₁, der deutlich kürzer ist als eine Bildperiode bzw. als die für einen Auslesevorgang erforderliche Zeit Tᵣ und der z.B. 5 ms beträgt, wesentlich mehr Ladungsträger in den CCD-Zellen des Bildbereiches 71 entstehen als im Durchleuchtungsbetrieb. Die Lichtintensität innerhalb des Zeitintervalls T₁ wird dabei so angepaßt, daß möglichst viele Ladungsträger in den CCD-Zellen akkumuliert werden, jedoch nicht soviele, daß in den für die Diagnose wichtigen Bildbereichen eine Übersteuerung auftritt bzw. in den zugehörigen Zellen die maximal speicherbare Zahl von Ladungsträgern erreicht wird.

Am Ende des Zeitintervalls T₁, d.h. zum Zeitpunkt tₜᵣ₁, wird durch einen Transferimpuls das auf diese Weise erzeugte erste Bild aus dem Bildbereich in den Speicherbereich transferiert. Gleichzeitig beginnt in einem zweiten Zeitintervall T₂, das sich ohne Pause an T₁ anschließt und vorzugsweise genauso lang ist wie T₁, die Erzeugung eines zweiten Bildes, wobei der Röntgenstrahler mit unveränderter Intensität eingeschaltet bleibt. Am Ende dieses zweiten Zeitintervalls T₂, d.h. zur Zeit t_{off}, wird die Röntgenstrahlung abgeschaltet.

Das Auslesen des ersten Bildes aus dem Speicherbereich erfolgt während des Zeitraums Tᵣ unmittelbar nach dem Zeitpunkt t_{off}. Es ist jedoch auch möglich, mit dem Auslesen des ersten Bildes schon beim Einlesen des zweiten Bildes zu beginnen oder aber auch erst dann, wenn eine normale Bildperiode (40 ms) seit dem Zeitpunkt tₒₙ verstrichen ist. In jedem Fall endet der Auslesevorgang des ersten Bildes wesentlich später als der Zeitraum T₂, innerhalb dessen das zweite Bild erzeugt wird.

Der Transferimpuls für den Transfer des zweiten Bildes aus dem Bildbereich in den Speicherbereich darf daher nicht schon am Ende des Aufbaues des zweiten Bildes erzeugt werden, wie sonst üblich, sondern erst nach dem Ende des Auslesevorganges für das erste Bild. Dieser Zeitpunkt ist in Fig. 3 mit tₜᵣ₂ bezeichnet. Das Auslesen des zweiten Bildes erfolgt dann während eines Intervalls Tᵣ.

Bevor der Auslesevorgang des ersten Bildes beginnt, wird der Inhalt des Speichers 10 gelöscht. Deshalb wird das erste Bild nach dem Auslesen, der Digitalisierung im Analog-Digital-Wandler 8 und dem Durchlaufen des Addierers 9 unverändert gespeichert. Dagegen wird beim Auslesen des zweiten Bildes dieses zweite Bild Bildpunkt für Bildpunkt in dem Addierer 9 addiert zu dem ersten Bild, und das dabei erzeugte Summenbild wird in den Speicher 10 eingeschrieben. Das auf diese Weise im Speicher 10 erzeugte Summenbild stellt die Röntgenaufnahme dar. Das erzielbare Signal/Rausch-Verhältnis kann als Folge der Addition um bis zu 3 dB größer sein als das mit einem einzigen Bild erzielbare Signal/Rausch-Verhältnis. Diese Röntgenaufnahme enthält relativ geringe Bewegungsartefakte, weil sie in einer relativ kurzen Zeit (T₁+T₂) erstellt worden ist.

Nach einer Zeit von 150 ms oder mehr kann eine erneute Röntgenbelichtung zur Erzeugung einer weiteren Röntgenaufnahme erfolgen.

Die Wortbreite des Speichers 10 muß um mindestens eine Binärstelle größer sein als die des Analog-Digital-Wandlers 8. Wenn der Analog-Digital-Wandler beispielsweise Datenworte mit einer Wortbreite von 8 bit erzeugt, muß jeder Speicherplatz des Speichers 10 Datenworte mit mindestens neun bit Wortbreite speichern können. Deshalb wird ein Speicher mit einer Wortbreite von 16 bit verwendet.

Fig. 4 zeigt ein CCD-Bildaufnehmer vom Frame-Transfer-Typ. Diese Bildaufnehmer besitzen einen räumlich zusammenhängenden Speicherbereich 74 und einen räumlich zusammenhängenden Bildbereich 75, die jeweils aus der gleichen Zahl von Spalten und Zeilen von CCD-Elementen bestehen. Bei einem Transfer des Bildes aus dem Bildbereich 75 in dem Speicherbereich 74 werden die Ladungspakete aus den einzelnen CCD-Zellen des Bildbereichs in den Speicherbereich verschoben, wobei jedes Ladungspaket soviel CCD-Zellen durchläuft, wie in einer Spalte des Bild- oder Speicherbereichs enthalten sind. Bei diesem Typ von CCD-Bildaufnehmer dauert der Bildtransfer daher länger (z.B. 0,5 ms) als bei dem in Fig. 2 dargestellten Typ. Das Auslesen mittels des horizontalen Schieberegisters 73 (es können auch zwei oder drei solcher Registervorhanden sein) erfolgt in ähnlicher Weise wie in Verbindung mit Fig. 2 beschrieben.

Grundsätzlich kann eine mit einem derartigen CCD-Bildaufnehmer angefertigte Röntgenaufnahme den gleichen zeitlichen Verlauf haben wie in Fig. 3 dargestellt. Sollte es jedoch aufgrund der größeren Transferzeiten zu Nachzieh- bzw. Verwischungseffekten kommen, wäre es erforderlich,die Röntgenstrahlung am Ende des Zeitraums T₁ abzuschalten, um sie nach einer Pause in der Größerordnung der Transferzeit wieder einzuschalten. Dies macht einerseits den Betrieb des Generators 2 komplizierter und verlängert andererseits die Gesamtaufnahmezeit für die Röntgenaufnahme (vom Beginn des Zeitraums T₁ bis zum Ende des Zeitraums T₂. Der in Fig. 2 dargestellte Bildaufnehmer-Typ ist daher zu bevorzugen.

In Fig. 5 ist ein CCD-Bildaufnehmer vom Frame-Interline-Transfer-Typ dargestellt. Wie schon der Name sagt, handelt es sich hierbei um eine Kombination der Typen nach Fig. 2 und Fig. 4: Dieser Typ besitzt neben einem aus vielen Spalten 71 zusammengesetzten Bildbereich, einen aus einer entsprechenden Anzahl von gegen Lichteinfall abgeschirmten Spalten zusammengesetzten ersten Speicherbereich 72 und einen zweiten, räumlich zusammenhängenden Speicherbereich 74. Das Bild wird dabei aus dem Bildbereich 71 sehr schnell in den ersten Speicherbereich 72 transferiert und später (etwas langsamer) in den zweiten Speicherbereich 74, wo es mittels des Horizontalregisters 73 auslesbar ist. Dieser Typ weist also zwei Speicherbereiche auf, so daß drei Bilder gleichzeitig verarbeitet werden können. Der zeitliche Ablauf einer Röntgenaufnahme mit einem solchen Bildaufnehmer ist in Fig. 6 dargestellt.

Nach dem Einschalten der Röntgenstrahlung zur Zeit tₒₙ wird im Bildbereich ein erstes Bild erzeugt. Dieses Bild wird nach Ablauf eines Zeitintervalls von z.B. 5 ms zur Zeit tₜᵣ₁ in den ersten Speicherberich 72 transferiert. Gleichzeitig beginnt der Aufbau des zweiten Bildes. Nachdem dieses während eines gleichlangen Zeitintervalls (5 ms) aufgebaut ist, wird es in den ersten Speicherbereich transferiert. Zuvor muß aber das erste Bild aus diesem ersten Speicherbereich 72 in den zweiten transferiert werden. Dies kann unmittelbar nach seinem in den ersten Speicherbereich 72 geschehen, jedoch auch erst kurz vor dem Zeitpunkt tₜᵣ₂.

Gleichzeitig mit dem Transfer des zweiten Bildes in den ersten Bildspeicher beginnt im Bildbereich der Aufbau des dritten Bildes, der nach einem dritten Zeitintervall von gleicher Länge wie die vorangehenden beendet ist (zum Zeitpunkt t_{off}). Danach (im Prinzip aber auch schon nach dem Zeitpunkt tₜᵣ₁) kann das Auslesen des ersten Bildes aus dem zweiten Bildspeicher 74 beginnen. Dieses erste Bild wird in den Speicher 10 geschrieben, nachdem dessen Inhalt zuvor gelöscht worden ist.

Nach dem Ende des Auslesevorganges für das erste Bild - zum Zeitpunkt tₜᵣ₃ - wird das zweite Bild aus dem ersten Bildspeicher 72 in den zweiten Bildspeicher 74 transferiert und danach ausgelesen, digitalisiert und dann Bildpunkt für Bildpunkt zu dem im Speicher 10 gespeicherten ersten Bild addiert. Nach dem Ende des Auslesevorganges für das zweite Bild erfolgt - zum Zeitpunkt tₜᵣ₄ - der Transfer des dritten Bildes in den zweiten Speicherbereich 74 - über den ersten Speicherbereich 71. Das dritte Bild wird dann wiederum ausgelesen und bildpunktweise zu dem im Speicher 10 gespeicherten, aus den beiden ersten Bildern bestehenden Summenbild addiert.

Das durch die Summierung der drei Bilder neu entstehende Summenbild stellt die Röntgenaufnahme dar. Diese Röntgenaufnahme weist bei hohen Ortsfrequenzen (und einer hohen Röntgenstrahlendosis für die drei Bilder, aus denen es sich zusammensetzt) ein um bis zu 4,7 dB verbessertes Signal-Rausch-Verhältnis auf im Vergleich zu einer Röntgenaufnahme, die aus nur einem einzigen Bild besteht. Die Bildqualität wird dadurch also noch weiter verbessert, jedoch auf Kosten einer um 50 % verlängerten Gesamtaufnahmedauer (im Vergleich zur Verwendung eines CCD-Bildaufnehmers mit nur einem Bildspeicher). Darüberhinaus muß zwischen zwei Röntgenaufnahmen ein größerer zeitlicher Abstand eingehalten werden als bei dem in Verbindung mit Fig. 3 erläuterten Verfahren; allerdings reicht diese reduzierte Bildfrequenz für die meisten medizinischen Anwendungen aus.

## Patentansprüche

1. Verfahren zum Erzeugen von Röntgenaufnahmen mittels eines Röntgenbildwandlers und eines CCD-Bildaufnehmers, mit folgenden Schritten:
a) Erzeugen einer ersten Röntgenbelichtung während eines ersten Zeitintervalls (T₁), das kürzer ist als die Auslesedauer (Tᵣ) eines im Speicherbereich des CCD-Bildaufnehmers enthaltenen Bildes,
b) Transferieren des bei der ersten Röntgenbelichtung in dem Bildbereich (71;75) des CCD-Bildaufnehmers (7) erzeugten ersten Bildes in dessen Speicherbereich (72;74) nach dem Ablauf des ersten Zeitintervalls (T₁),
c) Erzeugen einer zweiten Röntgenbelichtung unmittelbar nach oder in geringem zeitlichen Abstand von der ersten Röntgenbelichtung während eines zur Auslesedauer (Tᵣ) kurzen zweiten Zeitintervalls (T₂),
d) Auslesen des ersten Bildes aus dem Speicherbereich (72;74) und Einlesen des Bildes in einen weiteren Speicher (10)
e) Transferieren des zweiten Bildes in den Speicherbereich (72;74) nach dem Auslesen des ersten Bildes,
f) Auslesen des zweiten Bildes und Summieren zu dem im weiteren Speicher (10) gespeicherten ersten Bild zwecks Erzeugung der Röntgenaufnahme.

2. Verfahren nach Anspruch 1,
dadurch gekennzeichnet, daß die Schritte a) bis f) nach einer Zeitspanne wiederholt werden, deren Dauer größer ist als die zweifache Auslesedauer.

3. Verfahren nach einem der vorhergehenden Ansprüche für CCD-Bildaufnehmer mit zwei Speicherbereichen,
dadurch gekennzeichnet, daß nach der ersten Röntgenbelichtung das erste Bild zunächst in dem ersten Speicherbereich transferiert wird, daß nach der zweiten Röntgenbelichtung das zweite Bild in den ersten Speicherbereich transferiert wird und eine dritte Röntgenbelichtung erfolgt, und daß die durch drei Röntgenbelichtungen erzeugten drei Bilder nacheinander ausgelesen und zueinander addiert werden.

4. Verfahren nach einem der vorhergehenden Ansprüche,
dadurch gekennzeichnet, daß die Röntgenbelichtungen ohne Pause aufeinander folgen.

5. Röntgengerät zur Durchführung des Verfahrens nach Anspruch 1 mit einem Röntgenstrahler (1) zum Durchstrahlen eines Untersuchungsbereichs, einem Röntgenbildwandler (4) zur Umsetzung der jenseits des Untersuchungsbereichs eintreffenden Röntgenstrahlung in ein sichtbares Bild, einer Bildaufnahmevorrichtung (6) mit einem CCD-Bildaufnehmer (7) zur Umsetzung des sichtbaren Bildes in elektrische Signale, einem weiteren Speicher (10) zur Aufnahme der elektrischen Signale und einer Steuereinheit (11) zur Steuerung der Komponenten (1..10) des Röntgengerätes,
dadurch gekennzeichnet, daß Mittel zum bildpunktweisen Addieren des aus dem CCD-Bildaufnehmer (7) ausgelesenen Bildes zu dem in dem weiteren Speicher gespeicherten Bild (10) vorgesehen sind und daß die Steuereinheit die Komponenten derart steuert, daß zwei oder mehrer kurze Röntgenbelichtungen in geringem zeitlichen Abstand voneinander erfolgen, daß die dabei erzeugten Bilder nacheinander den bzw. die Speicherbereiche (72,74) des CCD-Bildaufnehmers (7) durchlaufen und daß die Bilder aus dem letzten Speicherbereich nacheinander ausgelesen, gespeichert und zueinander addiert werden.

## Claims

1. A method of generating X-ray images by means of an X-ray image converter and a CCD image sensor, comprising the following steps:
a) performing a first X-ray exposure during a first time interval (T₁) which is shorter than the read-out period (Tᵣ) of an image stored in the storage section of the CCD image sensor,
b) transferring the first image generated in the image section (71; 75) of the CCD image sensor (7) during the first X-ray exposure to the storage section thereof (72; 74) after expiration of the first time interval (T₁),
c) performing a second X-ray exposure directly after, or at a short distance in time from, the first X-ray exposure during a second time interval (T₂) which is short in comparison with the read-out period (Tᵣ),
d) reading out the first image from the storage section (72; 74) and writing the image into a further memory (10),
e) transferring the second image to the storage section (72; 74) after the reading out of the first image,
f) reading out the second image and summing it with the first image stored in the further memory (10) so as to produce the X-ray image.

2. A method as claimed in Claim 1, characterized in that the steps a) to f) are repeated after a period of time whose duration is greater than twice the read-out period.

3. A method as claimed in one of the preceding Claims for CCD image sensors comprising two storage sections, characterized in that after the first X-ray exposure the first image is first transferred to the first storage section, that after the second X-ray exposure the second image is transferred to the first storage section and a third X-ray exposure, is performed, and that the three images produced by three X-ray exposures are successively read out and added to one another.

4. A method as claimed in one of the preceding Claims, characterized in that the X-ray exposures succeed one another without interruption.

5. An X-ray apparatus for carrying out the method claimed in Claim 1, comprising an X-ray source (1) for irradiating an examination zone, an X-ray image converter (4) for converting the X-rays incident to the other side of the examination zone into a visible image, an image pick-up device (6) comprising a CCD image sensor (7) for converting the visible image into electric signals, a further memory (10) for storing the electric signals, and a control unit (11) for controlling the components (1 ... 10) of the X-ray apparatus, characterized in that there are provided means for the pixelwise addition of the image read out from the CCD image sensor (7) to the image stored in the further memory (10), the control unit controlling the components in such a manner that two or more brief X-rays exposures are performed at a small distance in time from one another, the images thus generated successively passing through the storage section (sections) (72, 74) of the CCD image sensor (7), the images being successively read out from the last storage section, followed by storage and addition to one another.

## Revendications

1. Procédé de production de radiographies à l'aide d'un transformateur d'images radiographiques et d'une unité de prise de vues CCD avec les étapes suivantes:
a) production d'une première exposition aux rayons X pendant un premier intervalle temporel (T₁) qui est plus court que la durée de lecture (Tᵣ) d'une image contenue dans la plage de mémoire de l'unité de prise de vues CCD,
b) transfert de la première image produite lors de la première exposition aux rayons X dans la zone d'image (71; 75) de l'unité de prise de vues CCD (7) dans sa zone de mémoire (72; 74) après l'expiration du premier intervalle temporel (T₁),
c) production d'une deuxième exposition aux rayons X immédiatement après ou dans un intervalle temporel minime par rapport à la première exposition aux rayons X pendant un court deuxième intervalle temporel (T₂) par rapport à la durée de lecture (Tᵣ),
d) lecture de la première image de la zone de mémoire (72; 74) et enregistrement de l'image dans une autre mémoire (10),
e) transfert de la deuxième image dans la zone de mémoire (72; 74) après la lecture de la première image,
f) lecture de la deuxième image et addition à la première image enregistrée dans l'autre mémoire (10) en vue de la production de la radiographie.

2. Procédé selon la revendication 1, caractérisé en ce que les étapes a) à f) sont répétées après un intervalle de temps dont la durée est supérieure au double de la durée de lecture.

3. Procédé selon l'une des revendications précédentes pour une unité de prise de vues CCD avec deux zones de mémoire, caractérisé en ce qu'après la première exposition aux rayons X, la première image est d'abord transférée dans la première zone de mémoire, qu'après la deuxième exposition aux rayons X, la deuxième image est transférée dans la première zone de mémoire, qu'il se produit une troisième exposition aux rayons X et que les trois images produites par trois expositions aux rayons X sont successivement lues et additionnées l'une à l'autre.

4. Procédé selon l'une des revendications précédentes, caractérisé en ce que les expositions aux rayons X se succèdent sans pause.

5. Appareil radiographique en vue de la mise en oeuvre du procédé selon la revendication 1 avec un générateur de rayons X (1) pour l'irradiation d'une zone d'examen, un transformateur d'images radiographiques (4) pour la transformation du rayonnement X incident au-delà de la zone d'examen en une image visible, un dispositif d'enregistrement de l'image (6) avec une unité de prise de vues CCD (7) en vue de convertir l'image visible en signaux électriques, une autre mémoire (10) pour enregistrer les signaux électriques et une unité de commande (11) en vue de la commande des composants (1...10) de l'appareil radiographique, caractérisé en ce que des moyens en vue de l'addition par pixels de l'image lue de l'unité de prise de vues CCD (7) à l'image (10) enregistrée dans l'autre mémoire sont prévus et que l'unité de commande commande les composants de telle sorte que deux courtes expositions aux rayons X ou plus se produisent à un intervalle temporel minime l'une de l'autre de telle sorte que les images ainsi produites traversent successivement la ou les zones de mémoire (72, 74) de l'unité de prise de vues CCD (7) et que les images provenant de la dernière zone de mémoire soient successivement lues, enregistrées et additionnées l'une à l'autre.
